# FASCICULE DE BREVET EUROPEEN

(11) **EP 0 699 024 B1**
(45) Date de publication et mention de la délivrance du brevet: **29.10.1997**
(21) Numéro de dépôt: 94916284.6
(22) Date de dépôt: 13.05.1994
(51) Int. Cl.: A01K 1/12, A01K 11/00

(54) **PROCEDE ET SYSTEME DE CONTROLE LAITIER AUTOMATIQUES ET EPROUVETTE DE CONTROLE POUR UN TEL SYSTEME**
VERFAHREN UND VORRICHTUNG ZUR AUTOMATISCHEN MILCHKONTROLLE UND KONTROLLPROBE FÜR EIN SOLCHES SYSTEM
AUTOMATIC MILK RECORDING METHOD AND SYSTEM, AND METER OR JAR FOR SAID SYSTEM

(30) Priorité: 14.05.1993 FR 9305871
(43) Date de publication de la demande: 06.03.1996
(73) Titulaire: INSTITUT NATIONAL DE LA RECHERCHE AGRONOMIQUE (INRA), F-75341 Paris Cédéx 07 (FR)
(72) Inventeur: BARILLET, Francis, F-31500 Toulouse (FR); BIBE, Bernard, F-31320 Castanet-Tolosan (FR); GUILLOUET, Philippe, F-12250 Roquefort-sur-Soulzon (FR); POIVEY, Jean-Paul, F-31320 Castanet-Tolosan (FR); RICARD, Edmond, F-31450 Montgiscard (FR)
(74) Mandataire: Phélip, Bruno
(86) Numéro de dépôt international: FR9400574
(87) Numéro de publication internationale: WO9426096

(56) Documents cités:
- EP-A- 0 091 892
- DE-A- 3 702 465
- GB-A- 1 190 432
- US-A- 4 463 353

## Description

L'invention est relative à un procédé et un système de contrôle laitier automatiques ainsi qu'à une éprouvette pour un tel système de contrôle. Ce procédé et ce système sont plus particulièrement destinés aux ovins et caprins laitiers et ils peuvent être également utilisé pour les bovins laitiers.

Pour des raisons économiques, la mécanisation de la traite s'est imposée pour les bovins laitiers mais également pour les ovins et caprins laitiers.

On procède de façon classique à des contrôles laitiers chez les éleveurs. Les échantillons prélevés sont analysés. Les résultats obtenus sont rassemblés par des systèmes informatisés généraux pour la gestion de l'information. Ceux-ci sont utilisés pour sélectionner les animaux.

Il y a quelques années, l'acquisition des données lors des contrôles laitiers s'effectuait, chez chaque éleveur, de façon entièrement manuelle.

Cependant, on a déjà développé un système informatisé de contrôle laitier pour les ovins, utilisable chez les éleveurs en salle de traite, et qui est un prolongement des systèmes généraux de gestion de l'information.

Ce système informatisé consiste essentiellement en un appareil de saisie associé à un logiciel approprié et un micro-ordinateur. L'appareil de saisie est utilisé dans la salle de traite et permet d'identifier les brebis, de noter la quantité de lait et éventuellement un numéro d'échantillon. Le micro-ordinateur est dans l'élevage où est effectué le contrôle, hors de la salle de traite. A la fin de la traite, l'information rassemblée dans l'appareil de saisie est transmise au micro-ordinateur pour vérification, stockage et valorisation. Elle est ensuite transmise à un système général de gestion de l'information.

Ce système informatisé permet de simplifier l'acquisition des données et de la rendre plus fiable. De plus, les informations recueillies chez chaque éleveur peuvent être immédiatement valorisées par des conseils spécifiques pour chaque élevage. Cependant, aucun système automatisé n'a été conçu pour les ovins et caprins laitiers.

Il existe déjà des systèmes de contrôle automatisés pour les bovins laitiers. Ces systèmes sont individuels, c'est-à-dire qu'un appareil est prévu pour chaque animal, et fonctionne indépendamment des autres appareils installés dans la salle de traite.

Les systèmes sont donc relativement coûteux.

Ces systèmes de contrôle nécessitent des compteurs à lait ou éprouvettes, dans lesquels est rassemblé le lait au fur et à mesure de la traite. Dans le cas des bovins laitiers, la quantité de lait trait est importante. C'est pourquoi, les compteurs à, lait utilisés sont en général du type dérivatif. Ainsi, le compteur est vidangé régulièrement pendant la traite d'une même vache, un échantillon élémentaire étant prélevé à chaque vidange. L'échantillon final comprend tous les échantillons élémentaires prélevés au cours de la traite. Ce procédé peut nécessiter de prévoir une chambre de dégazage pour enlever la mousse qui se forme.

On connaît également un compteur à lait exhaustif pour vaches laitières qui est commercialisé sous la dénomination LEVELMETER® par la société NEDAP. Ce compteur ne comporte aucun système particulier pour la prise d'échantillon. Celle-ci s'effectue manuellement en vidangeant le compteur dans un récipient. On prélève un échantillon dans ce dernier, après avoir homogénéisé manuellement le lait.

En ce qui concerne les ovins et caprins laitiers, même dans le cadre du système informatisé décrit plus haut, les contrôles sont effectués par des agents agréés qui utilisent des éprouvettes manuelles.

De telles éprouvettes ont notamment été décrites dans la revue Patre, n°260, janvier 79. Elles comprennent un robinet à trois voies ainsi qu'un robinet de prélèvement pour les échantillons.

Pour réaliser un contrôle laitier quantitatif et qualitatif, il faut pointer le numéro de l'animal sur une liste, noter à la main ou saisir sur l'appareil de saisie la quantité de lait et le numéro du flacon correspondant à un échantillon, pour chaque animal, et également procéder à une douzaine d'opérations, lesquelles consistent en la manipulation des robinets placés sur l'éprouvette et la lecture manuelle de la quantité de lait.

L'ensemble de ces opérations est réalisé animal par animal. Le contrôle prend donc nécessairement un temps relativement important.

Ainsi, pour respecter les cadences de traite le jour du contrôle laitier, il est nécessaire de prévoir un grand nombre d'intervenants.

On constate que tous les systèmes portables de contrôle connus, utilisés dans le cadre du contrôle laitier en ferme, sont des systèmes individuels qu'ils soient manuels, pour les ovins et les caprins laitiers ou automatisés, pour les bovins laitiers. Ces systèmes sont relativement rigides dans la mesure où, pour chaque animal, les étapes d'identification et de contrôle doivent être effectuées successivement. Ils ne sont pas, de plus, adaptés à une traite par lots.

On sait que ce type de traite est pratiquement systématique dans le cas des ovins et caprins laitiers. En effet, la quantité de lait trait pour chaque animal est faible. En l'absence d'une telle organisation par lots, le temps de manipulation serait supérieur au temps de traite pour les ovins et caprins laitiers.

On constate également que ce type de traite est de plus en plus fréquent pour les bovins laitiers, dès que les troupeaux sont importants.

Ainsi, les systèmes de contrôle connus ne peuvent être adaptés à l'organisation de la traite qu'en multipliant le nombre des intervenants effectuant le contrôle. Les contrôles sont donc très onéreux pour les éleveurs.

Les systèmes de contrôle automatiques portables qui existent pour bovins laitiers ne sont donc pas appropriés pour effectuer des contrôles d'ovins et caprins laitiers, dont la traite est pratiquement systématiquement organisée par lots.

De plus, les compteurs de type dérivatif qui existent pour les bovins laitiers ne sont pas utilisables pour les ovins laitiers, compte tenu des problèmes de précision des mesures qui sont constatés.

En effet, les conditions de traite sont différentes pour les ovins, en ce qui concerne notamment le temps de traite et les variations dans l'éjection et la richesse du lait. C'est pourquoi la précision des résultats de mesure est insuffisante, aussi bien pour la quantité que pour la composition du lait.

Les compteurs de type dérivatif sont également inadaptés au contrôle des ovins laitiers car la quantité de lait est relativement faible à chaque traite, contrairement au cas des bovins laitiers. Il est donc beaucoup plus simple de prévoir un compteur exhaustif, d'autant plus que les systèmes de prises d'échantillon des compteurs de type dérivatif sont relativement complexes.

Enfin, les compteurs de type exhaustif connus pour les bovins laitiers ne comportent aucun système automatique de prise d'échantillons. Un échantillon n'est prélevé qu'après vidange du compteur dans un récipient et mélange manuel du lait.

L'invention a pour objet de pallier les inconvénients des systèmes de contrôle connus en proposant un procédé de contrôle laitier automatique qui permet de contrôler des groupes ou lots d'animaux tout en offrant une grande souplesse lorsqu'il est mis en oeuvre.

Ce procédé consiste à:
- identifier la configuration dans laquelle sont physiquement placés les animaux dans le chantier de traite, avant de commencer la traite puis
- à effectuer, de manière dissociée, l'identification et le contrôle des animaux; l'identification des animaux étant réalisée dans un ordre déterminé correspondant à un ordre de place physique dans le chantier de traite et le contrôle des animaux étant effectué lors de la traite des animaux, dans un ordre quelconque, une relation étant effectuée entre d'une part, l'exécution du contrôle et les résultats obtenus et d'autre part, les animaux identifiés, par l'intermédiaire de leur place physique.

Dans des modes préférés de mise en oeuvre, le procédé présente les caractéristiques suivantes prises isolément ou en combinaison:
- les contrôles consistent notamment à prendre des échantillons de lait en fin de traite, le lait étant au cours de la traite recueilli, au moins en partie, dans une éprouvette;
- pour une éprouvette donnée, la prise d'échantillon est réalisée en brassant le lait dans ladite éprouvette, puis en mettant l'éprouvette en relation avec la pression atmosphérique extérieure, une partie de son contenu étant automatiquement vidée dans un flacon présenté par le contrôleur;
- les numéros d'échantillons de lait sont gérés automatiquement;
- l'ensemble des animaux devant être contrôlés étant connu, et lorsque la relation a été effectuée entre, d'une part, l'exécution du contrôle et les résultats obtenus et, d'autre part, les animaux identifiés, il consiste également à détecter les erreurs résultant de la comparaison entre les animaux identifiés et les résultats de contrôle, puis à les corriger;
- le procédé consiste à transmettre, à la fin du contrôle, l'ensemble des résultats obtenus à un système général de gestion de l'information.

L'invention concerne également un système de contrôle portable parfaitement adapté à l'organisation de la traite par lots. Ce système est plus particulièrement destiné aux ovins et caprins laitiers mais peut également trouver application pour les bovins. Il est destiné à être utilisé dans une salle de traite présentant des moyens pour la traite et un lactoduc. Ce système comprend:
- des moyens de saisie pour identifier les animaux, cette identification ayant lieu dans un ordre déterminé correspondant à la place physique des animaux dans la salle de traite, en fonction de la configuration du chantier de traite;
- des éprouvettes de contrôle reliées auxdits moyens de commande au moins par un dispositif de câblage et placées entre les moyens pour la traite et le lactoduc,
   le système comprenant autant d'éprouvettes de contrôle que le nombre maximum d'animaux traits simultanément dans la salle de traite, les moyens de saisie étant communs à toutes les éprouvettes et lesdits moyens de commande pilotant lesdites éprouvettes de contrôle pour effectuer dans un ordre quelconque les mesures de contrôle, les moyens de saisie et les moyens de commande étant indépendants pendant l'identification des animaux et communiquant entre eux pour établir la relation entre les animaux et les résultats des mesures de contrôle.

Dans des modes préférés de réalisation, le système présente les caractéristiques suivantes prises isolément ou en combinaison:
- les moyens de saisie, les moyens de commande et les éprouvettes de contrôle sont mobiles;
- le dispositif de câblage est fixe dans la salle de traite;
- les moyens de commande sont au moins en partie communs à toutes les éprouvettes, le dispositif de câblage reliant les éprouvettes auxdits moyens de commande;
- si la traite est effectuée dans un dispositif de traite rotatif, un système de communication sans fils est prévu pour établir une communication entre lesdits moyens de commande communs et les moyens de saisie;
- les moyens de commande sont au moins partiellement associés à chaque éprouvette;
- si la traite est effectuée dans un dispositif de traite rotatif, un système de communication sans fils est prévu pour établir une communication entre lesdits moyens de commande associés à chaque éprouvette et les moyens de saisie;
- à la fin de la traite de chaque lot d'animaux, les moyens de commande communs ou les moyens de commande associés à chaque éprouvette transmettent aux moyens de saisie les résultats des mesures ;
- lesdits moyens de saisie identifient les erreurs éventuellement commises lors du contrôle;
- le système est associé à un micro-ordinateur auquel lesdits moyens de saisie communiquent l'ensemble des résultats des mesures, à la fin de la traite.

De façon préférée, les éprouvettes de contrôle du système selon l'invention comprennent un récipient pour le lait, des premiers moyens étant prévus pour contrôler la mise en communication du récipient avec le lactoduc, ledit récipient étant mis en relation avec la pression atmosphérique ou une source de vide par des deuxièmes moyens de contrôle et avec un système de prise d'échantillons grâce à des troisièmes moyens de contrôle, ladite éprouvette comprenant également des moyens pour la mesure de la quantité de lait, les premiers, deuxièmes et troisièmes moyens de contrôle ainsi que les moyens de mesure étant pilotés par des moyens de commande pour permettre la mesure de la quantité de lait trait, le brassage du lait, la prise d'échantillons et/ou la vidange de l'éprouvette.

Dans des variantes préférées de réalisation, les éprouvettes du système de contrôle laitier présentent les caractéristiques suivantes prises isolément ou en combinaison:
- lors de la traite, les moyens de commande agissent sur les deuxièmes moyens de contrôle pour mettre le récipient en relation avec la source de vide, et sur les premiers et deuxièmes moyens pour bloquer la communication entre le récipient et d'une part, le lactoduc et d'autre part, le système de prise d'échantillons;
- à la fin de la traite et avant une éventuelle prise d'échantillons, les moyens de commande agissent sur les deuxièmes moyens de contrôle pour mettre le récipient en relation avec la pression atmosphérique et effectuent la mesure de la quantité de lait, indépendamment du niveau de vide de l'installation de traite, par l'intermédiaire desdits moyens de mesure;
- lesdits moyens pour la mesure de la quantité de lait trait consistent en un anneau flotteur placé autour d'une tige, située à l'intérieur du récipient, une sonde étant placée à l'intérieur de cette tige;
- après la mesure de la quantité de lait trait, lesdits moyens de commande agissent sur lesdits moyens de contrôle pour effectuer la vidange du récipient dans le lactoduc;
- avant la vidange du récipient, les moyens de commande agissent sur les deuxièmes et troisièmes moyens de contrôle pour effectuer le brassage du lait présent dans le récipient, puis pour mettre le récipient en communication avec le système de prise d'échantillons;
- lors d'une prise d'échantillons, les moyens de commande établissent la relation entre la place de l'animal et l'existence d'un échantillon;
- pendant la traite, lesdits moyens de commande effectuent des mesures intermédiaires de débit, par l'intermédiaire des moyens de mesure de la quantité de lait.

L'invention sera mieux comprise et d'autres buts, avantages et caractéristiques de celle-ci apparaîtront plus clairement à la lecture de la description qui suit de modes non limitatifs de réalisation, faite au regard des dessins annexés sur lesquels:
- la figure 1 représente un schéma d'une première variante du système de contrôle automatique selon l'invention;
- la figure 2 représente de façon schématique une éprouvette du système de contrôle selon l'invention; et
- la figure 3 représente un schéma d'une deuxième variante du système de contrôle selon l'invention.

Les éléments communs aux différentes figures seront désignés par les mêmes références.

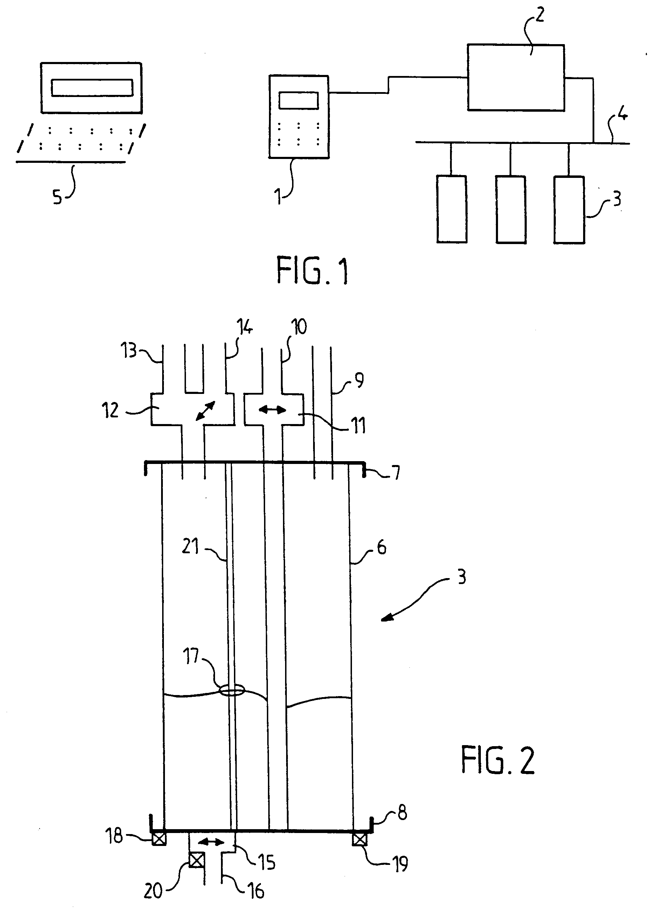

En référence à la figure 1, le système de contrôle automatique selon l'invention comprend un appareil de saisie 1, des moyens de commande constitués par un central de mesure 2, des éprouvettes de contrôle 3 ainsi qu'un dispositif approprié de câblage 4 reliant le central 2 aux éprouvettes 3.

Les moyens de commande peuvent également être constitués par tout autre dispositif électronique déporté assurant les mêmes fonctions que le central de mesure.

La description qui suit va tout d'abord être faite avec un central de mesure.

L'appareil de saisie 1, le central de mesure 2 et les éprouvettes 3 sont mobiles et transportables d'un élevage à un autre par le contrôleur laitier, tandis que le système de câblage 4 est, de préférence, fixe en salle de traite. En effet, le système de câblage peut être mobile mais compte-tenu du temps nécessaire à son installation, il est avantageux de le prévoir fixe. Le système automatisé est associé à un micro-ordinateur 5 qui est également transportable d'un élevage à l'autre.

Ce système est un perfectionnement du système de contrôle informatisé existant et qui a été décrit plus haut. Ces deux systèmes présentent des éléments communs : le micro-ordinateur 5 et l'appareil de saisie 1. Cependant le système de contrôle informatisé utilise des éprouvettes manuelles alors que le système selon l'invention fonctionne avec des éprouvettes automatiques pilotées par le central de mesure 2 ou, comme indiqué précédemment, par un dispositif électronique déporté.

Le passage d'un système de contrôle informatisé au système automatisé selon l'invention peut donc s'effectuer simplement, en termes de modification des installations.

Le fonctionnement du système va maintenant être décrit lors d'une utilisation avec un dispositif de traite mécanique par lots.

De façon classique, la salle de traite comprend deux quais placés de part et d'autre d'une fosse dans laquelle peuvent se déplacer les intervenants. Sur chaque quai, sont disposés un certain nombre de postes de traite, généralement 12 par quai, chaque poste de traite étant utilisé pour deux animaux.

Chaque poste de traite est équipé de moyens pour la traite (faisceau trayeur) et est relié à un lactoduc qui recueille l'ensemble du lait trait.

Pour effectuer la traite d'un lot, les animaux sont conduits devant les postes de traite. Dans la configuration prise à titre d'exemple, il peut donc y avoir 24 animaux par quai, 2 animaux pouvant être placés devant chaque poste de traite.

La salle de traite est équipée d'un câblage de préférence fixe 4, permettant au système selon l'invention de fonctionner.

Le jour de contrôle, le contrôleur a installé les éprouvettes 3 sur les postes de traite et les a reliées au central de mesure 2 grâce au câblage 4. Il y a donc autant d'éprouvettes que le nombre maximum d'animaux traits simultanément.

Le contrôleur a également chargé le micro-ordinateur 5 avec l'inventaire des animaux attendus à la traite.

Il indique aussi au central de mesure quelle est la configuration du chantier de traite afin que celui-ci puisse effectuer les correspondances entre les numéros d'identification des animaux et les informations recueillies au niveau de chaque éprouvette.

Un lot d'animaux est placé dans la salle de traite pour être trait. Le contrôleur relève tout d'abord tous les numéros d'identification des animaux. Ce relevé peut être effectué, soit manuellement en composant, sur le boîtier de saisie, le numéro de chaque animal, soit automatiquement lorsque les animaux sont équipés de systèmes électroniques d'identification. Dans ce cas, il suffit que le contrôleur approche un moyen de lecture de chaque système électronique.

Le relevé des numéros d'identification s'effectue dans un ordre donné correspondant à un ordre de place des animaux, de façon à ce qu'une relation puisse ensuite être effectuée, par le central de mesure, entre les informations obtenues lors du contrôle et chaque animal.

Une fois cette étape d'identification effectuée, le contrôleur peut effectuer les mesures pour le contrôle dans un ordre quelconque.

Le fait que l'étape d'identification soit dissociée de l'étape de contrôle pour chaque animal, est une caractéristique essentielle du procédé et du système selon l'invention.

Le procédé de contrôle est très souple à mettre en oeuvre puisque les animaux peuvent être contrôlés selon un ordre quelconque. Ce procédé permet de spécialiser le travail de chaque contrôleur, de respecter le rythme du trayeur et de pouvoir prendre un échantillon dès qu'un animal est trait, quelle que soit sa place physique dans la salle de traite.

Pour décrire de façon plus précise le système de contrôle, il est maintenant nécessaire de s'intéresser aux éprouvettes.

On peut se reporter à la figure 2 qui représente schématiquement une éprouvette selon l'invention.

L'éprouvette 3 comprend un récipient 6 qui est placé entre le faisceau trayeur et le lactoduc, non représentés sur la figure.

Le récipient peut par exemple être constitué par un tube cylindrique en plexiglass fermé par deux flasques supérieur et inférieur, 7 et 8, en inox, les deux flasques étant reliés par une bride, également en inox, qui n'est pas représentée sur la figure.

Les flasques 7 et 8 et la bride peuvent également être réalisés en tout autre matériau conforme aux normes alimentaires.

La taille du récipient est suffisante pour contenir la totalité du lait de chaque animal pendant toute la durée de la traite.

Dans cet exemple, l'éprouvette 3 est donc une éprouvette exhaustive. Les éprouvettes pourraient également être du type dérivatif.

De manière générale, on préfère utiliser des éprouvettes exhaustives pour les ovins laitiers de façon à obtenir des mesures précises. Pour les caprins et les bovins, on peut utiliser des éprouvettes exhaustives ou du type dérivatif. Pour des raisons d'encombrement, les éprouvettes du type dérivatif sont plus couramment utilisées pour les bovins.

On peut considérer que le bocal de réception du lait d'une éprouvette dérivative est assimilable à l'éprouvette exhaustive qui est décrite en référence à la figure 2.

La référence 9 correspond au conduit d'arrivée du lait en provenance du faisceau trayeur tandis que la référence 10 désigne le conduit de départ du lait vers le lactoduc. On notera que le conduit de départ 10 plonge à l'intérieur du récipient 6 et qu'une électrovanne 11 est prévue entre ce conduit et le flasque supérieur 7, pour contrôler la mise en communication du conduit 10 avec le récipient 6.

La référence 12 désigne une électrovanne prévue dans le flasque supérieur qui met l'intérieur du récipient 6 en relation, soit avec le conduit 13 qui est relié à la pression atmosphérique, soit avec le conduit 14 qui est relié à une source de vide.

La référence 15 désigne une électrovanne qui est prévue dans le flasque inférieur 8 et qui contrôle la mise en relation de l'intérieur du récipient 6 avec un conduit 16 permettant la prise d'échantillons.

L'éprouvette 3 comprend également des moyens 17 de mesure de la quantité de lait et trois détecteurs ou interrupteurs permettant le fonctionnement du système automatisé.

Le premier détecteur 18 permet de signaler la pose du faisceau trayeur sur un animal, le deuxième interrupteur 19 est utilisé en fin de traite, notamment pour assurer la vidange de l'éprouvette. Le troisième interrupteur 20 qui est placé sous l'électrovanne 15 est actionné lorsqu'un flacon est présenté pour la prise d'échantillons.

On va maintenant décrire le fonctionnement de l'éprouvette, en relation avec le central de mesure.

Une fois que le faisceau trayeur est placé sur un animal donné, les opérations effectuées par un contrôleur pour cet animal sont les suivantes.

Le contrôleur peut commencer par enclencher le premier interrupteur 18, s'il veut indiquer au central de mesure 2 le début de la traite de l'animal, dans l'optique de mesurer les débits. Mais cette première intervention est facultative. Les électrovannes 11, 12 et 15 sont alors dans la position indiquée sur la figure 2. Ainsi, les conduits 10 et 16 sont fermés tandis que l'intérieur du récipient est en relation avec le conduit 14 et la source de vide. La traite s'effectue donc sous vide.

Le lait trait arrive dans l'éprouvette par le conduit 9.

En fin de traite, s'il n' y a pas de prise d'échantillons de lait, le contrôleur enclenche le deuxième interrupteur 19, ce qui entraîne des opérations qui sont automatiquement pilotées par le central de mesure.

Il s'agit dans un premier temps de la stabilisation et de la détermination de la quantité de lait présente dans le récipient 6 grâce au capteur 17. La mesure s'effectue sous la pression atmosphérique, l'intérieur du récipient étant alors mis en relation avec le conduit 13 grâce à une commande appropriée de l'électrovanne 12. Ainsi, la mesure s'effectue dans des conditions standard, ce qui n'est pas le cas lorsque la mesure est effectuée sous vide, le niveau de vide pouvant être différent d'une installation à l'autre.

Ce capteur peut par exemple consister en un anneau flotteur placé autour d'une tige 21, une sonde étant placée à l'intérieur de cette tige. Un tel capteur est généralement connu sous la dénomination de tige-reed.

Le central de mesure commande, dans un deuxième temps, la vidange de l'éprouvette, qui est temporisée en fonction de la quantité de lait. Le lait est alors évacué par le conduit 10. La vidange est effectuée sous la pression atmosphérique. La commande correspondante de l'électrovanne 12 est faite par le central de mesure.

En fin de traite, le contrôleur peut aussi prendre un échantillon. Pour cela, il présente un flacon sous l'électrovanne 15 ce qui enclenche le troisième interrupteur 20. Se déroulent alors les opérations suivantes : la mesure de la quantité de lait, le brassage du lait dans le récipient, le prélèvement de l'échantillon puis la vidange.

La mesure de la quantité de lait et la vidange s'effectuent comme décrit précédemment.

Le brassage est effectué de la façon suivante. Le central de mesure commande l'électrovanne 12 de façon à mettre l'intérieur de l'éprouvette en relation avec le conduit 14 et la source de vide, ce qui provoque le brassage du lait.

L'intérêt du brassage sera décrit plus précisément dans la suite, en relation avec les résultats concernant la précision des mesures.

Le prélèvement de l'échantillon est rendu possible par la commande appropriée de l'électrovanne 15 qui permet la mise en relation de l'intérieur du récipient 6 avec le conduit 16. Le prélèvement s'effectue sous la pression atmosphérique.

Une fois que la quantité de lait nécessaire a été prélevée, le contrôleur retire le flacon, ce qui entraîne automatiquement la fermeture du conduit 16 par l'électrovanne 15.

On peut ainsi recueillir des informations sur l'animal, concernant la quantité de lait produite ainsi que la composition de ce lait par l'analyse chimique de l'échantillon prélevé.

En ce qui concerne les échantillons, la relation avec l'animal correspondant est effectuée de la manière suivante.

Lorsque le contrôleur demande une prise d'échantillon, le central de mesure détecte la demande de brassage et établit une relation entre la place de l'animal et l'existence d'un échantillon.

Les échantillons sont classiquement rangés dans des racks. Pour pouvoir établir la relation entre le flacon et la place de l'animal, le contrôleur prend et replace les flacons dans un ordre prédéterminé.

Le contrôleur peut également identifier chaque flacon, par exemple par un système automatique du type code-barre et lecteur, ce qui évite de devoir prendre les flacons dans un ordre déterminé et de les replacer au bon endroit.

Dans une variante, le contrôleur peut demander des mesures de la quantité de lait présente dans l'éprouvette à des intervalles donnés au cours de la traite. Ceci nécessite d'enclencher l'interrupteur 18 à la pose des manchons trayeurs. La mesure est effectuée comme cela a été décrit précédemment pour la mesure finale en fin de traite. En tout état de cause, une mesure finale en fin de traite est réalisée.

Ces mesures intermédiaires de débit donnent des informations sur la cinétique de l'éjection de lait. Ces informations permettent d'apprécier la facilité à traire de l'animal.

Elles peuvent être effectuées dans les deux cas décrits précédemment, c'est-à-dire le contrôle avec ou sans prise d'échantillon.

Le contrôle est ainsi effectué pour chaque animal.

Le central de mesure 2 gère les éprouvettes 3 en les identifiant grâce au câblage 4 qui permet d'établir la relation entre les numéros des éprouvettes et l'emplacement des animaux.

Cette gestion correspond aux opérations suivantes:
- la vérification et l'exécution des ordres donnés par le contrôleur qui actionne les interrupteurs de chaque éprouvette : mesure à intervalles réguliers de la quantité de lait lors de la demande de mesure de débits, brassage du lait avant la prise d'échantillon, vidange de l'éprouvette et prise d'échantillon.
- le stockage des informations d'un lot d'animaux : quantités de lait, mesures de temps, numéros de flacons pour les échantillons.

Le central de mesure assure au contrôleur une souplesse totale pour réaliser le contrôle et notamment les prises d'échantillons. Le contrôleur n'est pas obligé de respecter l'ordre de traite des animaux contrairement à ce qui se passe pour les contrôles manuels.

Comme indiqué précédemment, l'étape d'identification s'effectue de façon globale au début du contrôle. Le central de mesure peut alors établir une relation entre le numéro d'identification d'un animal et sa place dans le chantier de traite. De plus, lors du contrôle proprement dit, le central de mesure identifie l'éprouvette.

Le central permet également de rassembler toutes les informations et de les transmettre à l'appareil de saisie, à la fin de la traite d'un lot donné d'animaux.

L'appareil de saisie 1 assure les fonctions suivantes :
- la communication avec le central 2 :
   à l'inverse de ce dernier qui est relié en permanence aux éprouvettes 3 par l'intermédiaire du câblage 4, l'appareil de saisie portable 1 est indépendant pendant l'identification des animaux. Il n'est nécessaire de le relier au central de mesure qu'à la fin de la traite de chaque lot d'animaux pour recueillir les informations stockées par le central. A la fin de cette opération, l'appareil de saisie établit les correspondances entre les numéros des animaux et les informations de chaque éprouvette conformément au chantier qui a été déclaré avant de commencer les contrôles proprement dits. Pour éviter de relier le boîtier au central via un câble, on peut prévoir d'effectuer la communication par une liaison infrarouge ou hertzienne. C'est l'appareil de saisie qui stocke toutes les données du chantier de traite.
- la communication avec le micro-ordinateur 5:
   elle s'effectue selon une procédure simplifiée. Cette communication permet, avant le début du contrôle, de charger un inventaire des animaux attendus à la traite, et inversement de restituer à la fin du contrôle l'ensemble des données recueillies. la gestion de cet inventaire inclut la gestion des erreurs (animal en double...) et de tous conflits (animal non trait...) intervenant pendant le contrôle.

En cas d'erreurs, le contrôleur effectue les contrôles supplémentaires qui s'avèrent nécessaires. Les informations correspondantes sont recueillies par l'appareil de saisie.

On peut également préciser qu'à la fin du contrôle, le central de mesure commande le nettoyage complet des éprouvettes et de tout le système.

Comme indiqué précédemment le central de mesure peut être remplacé par un dispositif électronique en partie déporté sur les éprouvettes. En effet, l'utilisation d'un central de mesure comporte certains inconvénients.

Tout d'abord, les fonctions essentielles du système de contrôle sont réalisées par le central de mesure. Lorsque les postes de traite sont en grand nombre, pour que le central ainsi que le dispositif de câblage ne soient ni trop complexes, ni trop onéreux, le central de mesure est conçu pour ne traiter qu'une éprouvette à la fois. Ceci peut entraîner des délais entre les demandes de l'utilisateur (par exemple, suivi des débits des (n) éprouvettes en cours de traite), notamment en cas de cadence de traite élevée.

Pour simplifier la conception du central de mesure et la réalisation du câblage, on choisit de placer une partie de l'électronique dans le câblage. Ceci, en cas de panne, pose des problèmes de réparation immédiate pour une personne non qualifiée qui souhaite terminer les contrôles. De plus, il ne peut pas être fabriqué de façon standardisée, quel que soit le type de salle de traite, ce qui majore les coûts de fabrication.

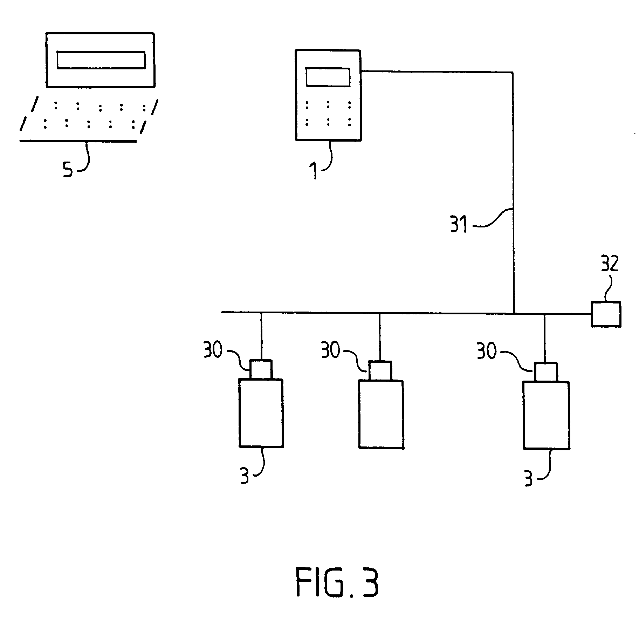

Ainsi, comme l'illustre la figure 3, le système de contrôle peut également comprendre un appareil de saisie 1, des éprouvettes de contrôle 3, des moyens de commande 30 déportés sur chaque éprouvette 3, des moyens de commande 32 communs aux éprouvettes et un dispositif de cablâge 31 reliant les éprouvettes 3 et les moyens de commande à l'appareil de saisie 1. Les moyens de commande communs 32 ont au moins pour objet de vérifier la cohérence entre les éprouvettes 3O de façon à éviter tout problème pratique de fonctionnement, tout en respectant les normes de sécurité applicables dans les salles de traite. Comme indiqué précédemment, les éprouvettes, équipées de moyens de commande 30, sont mobiles et transportables d'un élevage à l'autre, tandis que le système de câblage 31 est, de préférence, fixe en salle de traite.

Le fonctionnement du système est similaire à celui qui a été décrit pour le système de contrôle avec central de mesure.

Le jour du contrôle, le contrôleur installe les éprouvettes sur les postes de traite et les relie au cablâge 31. Les moyens de commande 30 associés à chaque éprouvette sont programmés, avant la traite, selon la configuration du chantier de traite. Cette programmation est réalisée par l'intermédiaire de l'appareil de saisie 1.

En dehors de la présence des moyens de commande 30, les éprouvettes ne sont pas modifiées. Leur fonctionnement est similaire à celui qui a été décrit précédemment, la différence consiste en ce que les éprouvettes ne fonctionnent pas en relation avec un central de mesure mais avec les moyens de commande 30 qui leur sont associés et les moyens de commande communs 32. Ce sont ces moyens 30 et 32 qui réalisent les fonctions du central de mesure, tandis que les moyens déportés 3O peuvent communiquer directement avec l'appareil de saisie 1, cette communication pouvant être réalisée de façon centralisée par les moyens de commande communs 32 (ce mode de réalisation n'est pas illustré sur la Figure 3). Ces moyens de commande 3O peuvent également répondre directement aux demandes d'un contrôleur.

On peut prévoir, sur les éprouvettes, un afficheur (non représenté sur les figures) pour indiquer par exemple au contrôleur, l'état de l'éprouvette et à l'éleveur, la quantité de lait trait.

Pour faciliter la maintenance, on peut également prévoir sur l'éprouvette un dispositif de test pour mettre en évidence les problèmes dus à des pannes ou des dysfonctionnements.

On constate que le système de contrôle, avec moyens de commande déportés sur les éprouvettes, permet de faciliter la maintenance qu'un dispositif de test soit, ou non, prévu. En effet, il suffit de changer une éprouvette si des problèmes mécaniques ou électroniques sont apparus au niveau de cette éprouvette. De plus, dans ce système de contrôle, les éprouvettes peuvent être traitées simultanément.

Enfin, ce système est moins onéreux que le précédent grâce à la suppression du central de mesure et à la standardisation pour la fabrication du système de câblage.

De façon générale, la répartition des fonctions entre les moyens de commande communs et les moyens de commande déportés peuvent varier d'un système à l'autre.

La description qui précède montre l'intérêt du système automatisé selon l'invention par rapport aux systèmes de contrôle automatiques portables connus pour les bovins.

Comme expliqué précédemment, ces systèmes sont individuels, c'est-à-dire qu'un appareil comportant une éprouvette doit être prévu pour chaque animal et est complètement indépendant des autres appareils installés dans la salle de traite. Il n'est donc pas possible de vérifier la cohérence entre les mesures obtenues.

Au contraire, le système selon l'invention comporte autant d'éprouvettes que d'animaux traits simultanément, ces éprouvettes étant contrôlées simultanément, toutes les fonctions communes pouvant être regroupées dans le central de mesure 2 (figure 1), ou au moins en partie dans les moyens communs 32 (figure 3).

Ceci confère au système de contrôle selon l'invention les avantages suivants :

Tout d'abord, les coûts sont réduits puisqu'une partie de l'électronique est commune à toutes les éprouvettes. De plus, l'identification des animaux et les contrôles proprement dits peuvent être dissociés, ce qui apporte une grande souplesse lors de l'exécution du contrôle. Cette propriété est particulièrement importante pour les chantiers de traite dont les cadences sont contraignantes, ce qui est fréquemment le cas pour les ovins, avec la traite par lots. Elle permet de spécialiser le travail de chaque contrôleur, de respecter le rythme du trayeur et de prendre un échantillon dès qu'un animal est entièrement trait, indépendamment de sa place dans le lot. Enfin, ce système apporte une grande fiabilité. En effet, les erreurs d'identification des animaux peuvent être facilement détectées et ensuite corrigées par le contrôleur, et la gestion des numéros des échantillons de lait est automatisée.

Les éprouvettes utilisées dans le système automatisé permettent de plus d'obtenir des précisions des mesures de la composition chimique du lait (qualité de l'échantillonnage) qui sont entièrement satisfaisantes.

Comme indiqué plus haut, le système de contrôle automatisé selon l'invention peut trouver application pour les bovins laitiers. La taille des éprouvettes doit seulement être adaptée à la quantité de lait trait.

Une autre solution, pour les espèces à production laitière journalière élevée, consiste à assimiler le bocal de réception du lait recueilli par les compteurs dérivatifs à l'éprouvette exhaustive telle que décrite en référence à la figure 2.

Il est cependant plus particulièrement destiné au contrôle d'ovins et caprins laitiers.

On sait que des normes d'agrément international (CICPE ou ICAR) existent déjà pour les compteurs à lait pour bovins laitiers, mais aucune pour les compteurs à lait pour ovins et caprins laitiers. Des travaux sont actuellement en cours pour l'élaboration de telles normes.

Cependant, pour pouvoir apprécier les précisions obtenues, les normes internationales définies pour le lait de vache ont été utilisées dans le cadre de la présente invention. Il convient de noter à cet égard que le lait de vache est en moyenne deux fois moins riche que le lait de brebis.

Le Tableau n°1 donne les limites d'erreur pour l'agrément des compteurs à lait pour les bovins et, a titre indicatif, pour les ovins.

**Tableau N°1**

| Espèce | Critère | Niveau des mesures | Biais maximum | Ecart-type de l'erreur |
|---|---|---|---|---|
| Bovins | Quantité de lait | 2 à 10 kg | 200 g | 250 g |
| | | > 10 kg | 2% de la mesure de référence | 2,5% de la moyenne de la mesure de référence |
| | taux butyreux | 20 à 60 g/kg | 0,5 g/kg | 1 g/kg |
| Ovins | Quantité de lait | 40 à 3000 ml | 30 ml | 40 ml |
| | taux butyreux | 40 à 120 g/l | 1 g/l | 2 g/l |

Les normes officielles du CICPE pour les bovins sont les suivantes :
- 8 éprouvettes en test et 40 mesures par éprouvette.
- quantité de lait : 40 mesures par éprouvette.
- taux butyreux : 40 doubles échantillons, dont 30 doivent être analytiquement valides (exclusion à 1 g/kg entre les doubles échantillons pour l'éprouvette ou pour la référence)
Les conditions respectées pour les ovins dans le cadre des mesures rapportées ici sont les suivantes :
- 8 éprouvettes en test et 40 mesures par éprouvette.
- quantité de lait : 40 mesures par éprouvette.
- taux butyreux : 40 doubles échantillons, soit 160 par éprouvette, dont 30 doivent être analytiquement valides (exclusion à 2 g/l entre les doubles échantillons pour l'éprouvette ou pour la référence).

Le Tableau n°2 récapitule les tests effectués et les interprète. Il effectue de plus une comparaison entre les éprouvettes manuelles qui ont été évoquées plus haut et les éprouvettes automatiques selon l'invention. Les tests ont été effectués sur des éprouvettes exhaustives.

**Tableau n°2**

| Type d'éprouvettes | Critère | Effet Eprouvettes | Effet dû au contrôleur | Erreur | | Agrément selon tableau 1 vette |
|---|---|---|---|---|---|---|
| | | | | Moyenne | Ecart-type | |
| Eprouvettes automatiques | Lait (quantité) | | impossible | -0.1 ml | 21 ml | OUI |
| | taux butyreux | NS | impossible | 0.15 g/l | 0.78 | OUI |
| | taux protéique | NS | impossible | -0.16 | 0.15 | OUI |
| Eprouvettes manuelles | lait (quantité) | * * (1 %) | * * (1 %) | 7 ml | 26 ml | OUI |
| | taux butyreux | * * (1 %) | NS | -2.70 g/l | 3.47 | NON |
| | taux proteique | NS | NS | 0.09 | 0.28 | OUI |

Le Tableau n°2 fait ainsi apparaître que les éprouvettes automatiques respectent les conditions qui ont été exposées plus haut. Elles assurent donc une prise d'échantillons qui est compatible avec la norme internationale requise pour l'agrément, dans le cadre des bovins, alors que le lait de brebis est en moyenne deux fois plus riche que le lait de vache.

En ce qui concerne les avantages des éprouvettes automatiques par rapport aux éprouvettes manuelles, on constate que ces dernières n'offrent pas une aussi bonne précision en ce qui concerne le taux butyreux. En particulier, pour cette grandeur, les éprouvettes manuelles ne respectent pas les conditions fixées plus haut dans le Tableau n°1.

Ces résultats illustrent l'intérêt de la prise d'échantillon automatique qui est prévue sur les éprouvettes selon l'invention.

On peut également souligner que les éprouvettes de contrôle selon l'invention sont avantageusement utilisées dans le système de contrôle automatique qui a été décrit mais qu'elles peuvent également être utilisées dans d'autres systèmes de contrôle, comme par exemple les systèmes de contrôle individuels connus pour les bovins.

La description qui précède du système automatisé de contrôle a été faite avec un dispositif mécanique de traite par lots et organisé en quais. Le nombre d'animaux par quais peut bien sûr être différent. On peut aussi envisager d'utiliser le système selon l'invention avec un dispositif de traite rotatif.

De façon connue, un dispositif de traite rotatif est un manège circulaire tournant sur lui-même. Dans un tel dispositif et contrairement à un système classique de salle de traite, les animaux bougent et les trayeurs sont à des postes fixes.

Dès l'entrée d'un animal dans le manège, un trayeur pose les manchons. L'animal va alors effectuer un ou plusieurs tours, le temps de la traite. Lorsque la traite est finie, un autre trayeur dépose les manchons. Les contrôleurs se trouvent à la sortie des animaux, également à poste fixe. Le premier, à l'intérieur du manège, effectue les vidanges et les prélèvements, le second à l'extérieur s'occupe de l'identification des animaux.

Ce type de salle de traite, qui permet d'augmenter la cadence de traite en diminuant les temps de pourvoyage des animaux, convient bien aux gros troupeaux.

Les éprouvettes 3, le câblage 4 ou 31 et les moyens de commande 2 ou 30 sont embarqués sur le manège et sont donc mobiles. L'appareil de saisie 1 qui comporte l'inventaire des animaux à traire et qui est chargé du stockage des informations, est à poste fixe.

Ainsi, l'utilisation du système de contrôle laitier selon l'invention dans un dispositif de traite rotatif nécessite d'adapter la transmission des informations entre l'appareil de saisie 1 et les moyens de commande, lorsque ceux-ci sont sous la forme d'un central de mesure 2 ou entre l'appareil de saisie 1 et le dispositif de cablâge 31, lorsque les moyens de commande 30 sont placés au niveau des éprouvettes.

Cette transmission doit s'effectuer par un système de communication sans fils qui n'est pas représenté sur les figures.

On peut envisager un système de communication utilisant une liaison hertzienne, en particulier des systèmes émetteurs-récepteurs du commerce utilisant les ondes radio.

Un système utilisant une liaison courant porteur peut également être utilisé.

De façon connue, le principe de la transmission par courant porteur consiste à utiliser le câblage électrique du secteur (70, 2OO ou 380V) pour véhiculer des informations, en modulant la fréquence porteuse de 5O Hz du secteur (70, 2OO ou 380V) avec le signal que l'on souhaite transmettre.

De plus, on a indiqué que le transfert des informations à l'appareil de saisie était effectué à la fin de la traite de chaque lot. On peut également envisager un transfert des informations avant que tout le lot ne soit trait. Ceci est notamment le cas pour les dispositifs de traite rotatifs où le transfert s'effectue de façon continue.

Il a été exposé précédemment qu'avant de commencer le contrôle proprement dit, le contrôleur indique aux moyens de commande, par l'intermédiaire de l'appareil de saisie 1, quelle est la configuration de chantier de traite. Celui-ci prend généralement une des formes suivantes : par quais (avec les variantes dites : "pair - impair", "quai par quai" ou combinaison des deux) ou rotatif (avec les variantes dites: "un tour" ou "deux tours" par animal). A chaque configuration correspond un logiciel des moyens de commande. Ce logiciel permet aux moyens de commande d'effectuer la correspondance entre les numéros des animaux et les informations au niveau de chaque éprouvette de contrôle.

Les signes de références insérés après les caractéristiques techniques mentionnées dans les revendications, ont pour seul but de faciliter la compréhension de ces dernières, et n'en limitent aucunement la portée.

## Revendications

1. Procédé de contrôle laitier automatique pour un lot d'animaux consistant:
- à identifier la configuration dans laquelle sont physiquement placés les animaux dans le chantier de traite, avant de commencer la traite puis
- à effectuer, de manière dissociée, l'identification et le contrôle des animaux,
l'identification des animaux étant réalisée dans un ordre déterminé correspondant à un ordre de place physique dans le chantier de traite et le contrôle des animaux étant effectué lors de la traite des animaux, dans un ordre quelconque, une relation étant effectuée entre d'une part, l'exécution du contrôle et les résultats obtenus et d'autre part, les animaux identifiés, par l'intermédiaire de leur place physique.

2. Procédé selon la revendication 1, selon lequel les contrôles consistent notamment à prendre des échantillons de lait en fin de traite, le lait étant au cours de la traite recueilli, au moins en partie, dans une éprouvette.

3. Procédé selon la revendication 2, selon lequel, pour une éprouvette donnée, la prise d'échantillon est réalisée en brassant le lait dans ladite éprouvette, puis en mettant l'éprouvette en relation avec la pression atmosphérique extérieure, une partie de son contenu étant automatiquement vidée dans un flacon présenté par le contrôleur.

4. Procédé selon l'une des revendications 2 ou 3, selon lequel les numéros d'échantillons de lait sont gérés automatiquement.

5. Procédé selon l'une des revendications 1 à 4, caractérisé en ce que l'ensemble des animaux devant être contrôlés étant connu, et lorsque la relation a été effectuée entre d'une part, l'exécution du contrôle et les résultats obtenus et d'autre part, les animaux identifiés, il consiste également à détecter les erreurs résultant de la comparaison entre les animaux identifiés et les résultats du contrôle, puis à les corriger.

6. Procédé selon les revendications 1 à 5, caractérisé en ce qu'il consiste à transmettre, à la fin du contrôle, l'ensemble des résultats obtenus à un système général de gestion de l'information.

7. Système de contrôle laitier utilisé dans une salle de traite présentant des moyens pour la traite et un lactoduc, ledit système comprenant
- des moyens de saisie (1) pour identifier les animaux, cette identification ayant lieu dans un ordre déterminé correspondant à la place physique des animaux dans la salle de traite, en fonction de la configuration du chantier de traite;
- des éprouvettes de contrôle (3) reliées à des moyens de commande (2; 30, 32) par un dispositif de câblage (4, 31) et placées entre les moyens pour la traite et le lactoduc,
le système comprenant autant d'éprouvettes de contrôle que le nombre maximum d'animaux traits simultanément dans la salle de traite, les moyens de saisie (1) étant communs à toutes les éprouvettes (3) et lesdits moyens de commande (2; 30, 32) pilotant lesdites éprouvettes de contrôle (3) pour effectuer dans un ordre quelconque les mesures de contrôle, les moyens de saisie (1) et les moyens de commande (2; 30, 32) étant indépendants pendant l'identification des animaux et communiquant entre eux pour établir la relation entre les animaux et les résultats des mesures de contrôle.

8. Système selon la revendication 7, caractérisé en ce que les moyens de saisie (1), les moyens de commande (2; 30, 32) et les éprouvettes de contrôle (3) sont mobiles.

9. Système selon l'une des revendications 7 ou 8, caractérisé en ce que le dispositif de câblage (4, 31) est fixe dans la salle de traite.

10. Système selon l'une des revendications 7 à 9, caractérisé en ce que les moyens de commande (2, 32) sont au moins en partie communs à toutes les éprouvettes (3), le dispositif de câblage (4, 31) reliant les éprouvettes (3) auxdits moyens de commande (2, 32).

11. Système selon l'une des revendications 7 à 10, caractérisé en ce que les moyens de commande (30) sont au moins partiellement associés à chaque éprouvette (3).

12. Système selon la revendication 10, caractérisé en ce que si la traite est effectuée dans un dispositif de traite rotatif, un système de communication sans fils est prévu pour établir une communication entre lesdits moyens de commande communs (2, 32) et les moyens de saisie (1).

13. Système selon la revendication 11, caractérisé en ce que si la traite est effectuée dans un dispositif de traite rotatif, un système de communication sans fils est prévu pour établir une communication entre lesdits moyens de commande (30) associés à chaque éprouvette et les moyens de saisie (1).

14. Système selon les revendications 7 à 13, caractérisé en ce qu'à la fin de la traite de chaque lot, les moyens de commande communs (2, 32) ou lesdits moyens de commande (30) associés à chaque éprouvette transmettent aux moyens de saisie (1) les résultats des mesures.

15. Système selon la revendication 14, caractérisé en ce que lesdits moyens de saisie (1) identifient les erreurs éventuellement commises lors du contrôle.

16. Système selon les revendications 14 ou 15, caractérisé en ce qu'il est associé à un micro-ordinateur (5) auquel lesdits moyens de saisie (1) communiquent l'ensemble des résultats des mesures, à la fin de la traite.

17. Système selon l'une des revendications 7 à 16, caractérisé en ce que les éprouvettes de contrôle (3) comprennent un récipient (6) pour le lait, des premiers moyens (11) étant prévus pour contrôler la mise en communication du récipient (6) avec le lactoduc, ledit récipient étant mis en relation avec la pression atmosphérique ou une source de vide par des deuxièmes moyens de contrôle (12) et avec un système (16) de prise d'échantillons grâce à des troisièmes moyens de contrôle (15), ladite éprouvette comprenant également des moyens (17) pour la mesure de la quantité de lait, les premiers, deuxièmes et troisièmes moyens de contrôle (11, 12, 15) ainsi que les moyens de mesure (17) étant pilotés par lesdits moyens de commande (2; 30, 32) pour permettre la mesure de la quantité de lait trait, le brassage du lait, la prise d'échantillons et/ou la vidange de l'éprouvette.

18. Système selon la revendication 17, caractérisé en ce que, lors de la traite, les moyens de commande (2 ; 30, 32) agissent sur les deuxièmes moyens de contrôle (12) pour mettre le récipient (6) en relation avec la source de vide, et sur les premiers et troisièmes moyens (11, 15) pour bloquer la communication entre le récipient et d'une part, le lactoduc et d'autre part, le système (16) de prise d'échantillons.

19. Système selon l'une des revendications 17 ou 18, caractérisé en ce qu'à la fin de la traite et avant une éventuelle prise d'échantillons, les moyens de commande (2 ; 30,32) agissent sur les deuxièmes moyens de contrôle (12) pour mettre le récipient (6) en relation avec la pression atmosphérique et effectuent la mesure de la quantité de lait, indépendamment du niveau de vide de l'installation de traite, par l'intermédiaire des moyens de mesure (17).

20. Système selon la revendication 19, caractérisé en ce que lesdits moyens (17) pour la mesure de la quantité de lait trait consistent en un anneau flotteur placé autour d'une tige (21), située à l'intérieur du récipient (6), une sonde étant placée à l'intérieur de cette tige.

21. Système selon l'une des revendications 19 ou 20, caractérisé en ce qu'après la mesure de la quantité de lait trait, lesdits moyens de commande (2 ; 30, 32) agissent sur lesdits moyens de contrôle (11) pour effectuer la vidange du récipient (6) dans le lactoduc.

22. Système selon l'une des revendications 17 à 21, caractérisé en ce qu'avant la vidange du récipient (6), les moyens de commande (2, 30 ; 32) agissent sur les deuxièmes et troisièmes moyens de contrôle (12, 15) pour effectuer le brassage du lait présent dans le récipient puis pour mettre le récipient (6) en communication avec le système (16) de prise d'échantillons.

23. Système selon l'une des revendications 17 à 22, caractérisé en ce que lors d'une prise d'échantillons, les moyens de commande établissent la relation entre la place de l'animal et l'existence d'un échantillon.

24. Système selon l'une des revendications 18 à 23, caractérisée en ce que pendant la traite, lesdits moyens de commande (2 ; 30, 32) effectuent des mesures intermédiaires de débit, par l'intermédiaire des moyens (17) de mesure de la quantité de lait.

## Claims

1. An automatic milk control method for a batch of animals consisting in :
- identifying the configuration in which the animals are placed physically in the milking plant, before starting the milking operation, then
- performing, in a separate way, the identification and the control of said animals,
identification of the animals being carried out in a prescribed order corresponding to an order of physical location in the milking plant and the control of animals taking place before the animals are milked, in any order, whereby a relation is derived from, on the one hand, the performance of the control and the results obtained and, on the other hand, the animals identified, via their physical location.

2. A method according to claim 1, in which the controls consist notably in sampling milk at the end of the milking operation, whereas the milk has been, at least partially, collected in a test tube during the milking operation.

3. A method according to claim 2, in which, for a given test tube, sampling is taken by agitating the milk in the said test tube, then in placing the test tube in contact with the external atmospheric pressure, whereas a portion of its contents is automatically poured in a vial presented by the controller.

4. A method according to any of the claims 2 or 3, in which the milk sample numbers are processed automatically.

5. A method according to any of the claims 1 to 4, characterised in that the batch of animals to be controlled being already known, and once the relation has been established between, on the one hand, the performance of the control and the results obtained and, on the other hand, the animals identified, it also consists in detecting the errors resulting from a comparison between the animals identified and the results of the control, then in correcting them.

6. A method according to claims 1 to 5, characterised in that it consists in transmitting, at the end of the control, all the results obtained to a general information processing system.

7. A milk control system used for a milking room exhibiting milking means and a milk pipeline, whereas the said system comprises :
- acquisition means (1) to identify the animals, whereby this identification takes place in a given order corresponding to the physical location of the animals in the milking room, in relation to the configuration of the milking plant ;
- test tubes (3) connected to control means (2; 30; 32) by a wiring device (4, 31) and placed between the milking means and the milk pipeline, whereas the system comprises as many test tubes as the maximum number of animals being milked simultaneously in the milking room, whereby the acquisition means (1) are common to all test tubes (3) and the said control means (2; 30, 32) driving the said test tubes (3) in order to perform in any order, the control measurements, whereby the acquisition means (1) and the control means (2; 30, 32) are independent during the identification process of the animals and communicate with one another to establish the relation between the animals and the results of the control measurements.

8. A system according to claim 7, characterised in that the acquisition means (1), the control means (2; 30, 32) and the test tubes (3) are mobile.

9. A system according to one of the claims 7 or 8, characterised in that the wiring device (4, 31) is fixed in the milking room.

10. A system according to one of the claims 7 to 9, characterised in that the control means (2, 32) are at least partially common to all test tubes (3), whereas the wiring device (4, 31) connects the test tubes (3) to the said control means (2, 32).

11. A system according to one of the claims 7 to 10, characterised in that the control means (30) are at least partially associated with each test tube (3).

12. A system according to claim 10, characterised in that, if the milking operation is performed in a rotary milking device, a wireless communications system has been designed in order to establish communications between the said common control means (2, 32) and the acquisition means (1).

13. A system according to claim 11, characterised in that if the milking operation is performed in a rotary milking device, a wireless communications system has been designed in order to establish communications between the said common control means (30) associated with each test tube, and the acquisition means (1).

14. A system according to claims 7 to 13, characterised in that after milking each different batch, the common control means (2, 32) or the said control means (30) associated with each test tube, transmit the results of the measurements to the said acquisition means (1).

15. A system according to claim 14, characterised in that the said acquisition means (1) identify the errors which may have been made during control.

16. A system according to claims 14 or 15, characterised in that it is associated with a microcomputer (5) to which the said acquisition means (1) communicate all the results of the measurements, upon completion of the milking operation.

17. A system according to one of the claims 7 to 16, characterised in that the test tubes (3) comprise a vessel (6) for the milk, whereas first means (11) have been designed to control the link of the vessel (6) with the milk pipeline, whereas the said vessel is put in contact with atmospheric pressure or a vacuum source, by second control means (12) and with a system (16) for collecting samples thanks to third control means (15), whereas the said test tube also comprises means (17) for measuring the quantity of milk, whereas the first, second and third control means (11, 12, 15) as well as the measuring means (17) are driven by the said control means (2; 30, 32) in order to enable the quantity of milk collected to be measured, the milk to be agitated, samples to be taken and/or the test tube to be emptied.

18. A system according to claim 17, characterised in that, during the milking operation, the control means (2 ; 30, 32) act on the second control means (12) in order to put the vessel (6) in contact with the vacuum source, and on the first and third means (11, 15) to block communications between the vessel and, on the one hand, the milk pipeline and, on the other hand, the sampling system (16).

19. A system according to one of the claims 17 or 18, characterised in that upon completion of the milking operation and before any sampling, the control means (2 ; 30, 32) act on the second control means (12) in order to put the vessel (6) in contact with the atmospheric pressure and measure the quantity of milk, regardless of the level of vacuum in the milking plant, via measuring means (17).

20. A system according to claim 19, characterised in that the said means (17) for measuring the quantity of milked collected consist of a floating ring placed round a rod (21), situated inside the vessel (6), whereby a probe has been arranged inside the said rod.

21. A system according to one of the claims 19 or 20, characterised in that after measuring the quantity of milk collected, the said control means (2 ; 30, 32) act onto the said control means (11) in order to empty the vessel (6) into the milk pipeline.

22. A system according to one of the claims 17 to 21, characterised in that before emptying the vessel (6), the control means (2; 30, 32) act onto the second and third control means (12, 15) to agitate the milk present in the vessel, then to connect the vessel (6) to the sampling system (16).

23. A system according to one of the claims 17 to 22, characterised in that during sampling, the control means establish the relation with the location of the animal and the existence of a test sample.

24. A system according to one of the claims 18 to 23, characterised in that during milking, the said control means (2; 30, 32) perform intermediate flow-rate measurements, via means (17) for measuring the quantity of milk.

## Patentansprüche

1. Verfahren zur automatischen Milchkontrolle für eine Gruppe von Tieren, bestehend aus:
- dem Identifizieren der Anordnung, in der die Tiere physisch am Melkplatz plaziert sind, bevor man mit dem Melken beginnt, und dann
- dem getrennten Durchführen der Identifizierung und der Kontrolle der Tiere, wobei die Identifizierung der Tiere in einer Reihenfolge durchgeführt wird, die entsprechend einer Reihenfolge der physikalischen Plazierungen am Melkplatz bestimmt wird, und die Kontrolle der Tiere während des Melkens der Tiere in einer beliebigen Reihenfolge durchgeführt wird, wobei ein Bezug hergestellt wird zwischen einerseits der Durchführung der Kontrolle und den erhaltenen Ergebnissen und andererseits den mittels ihrer physikalischen Plazierung identifizierten Tieren.

2. Verfahren gemäß Anspruch 1, bei dem die Kontrollen insbesondere darin bestehen, daß am Ende des Melkens Milchproben entnommen werden, wobei die Milch wenigstens zum Teil im Verlaufe des Melkens in einem Probegefäß gesammelt wird.

3. Verfahren gemäß Anspruch 2, bei dem die Probenahme für ein gegebenes Probegefäß durchgeführt wird, indem man die Milch in dem Probegefäß umrührt und dann das Probegefäß mit dem Druck der äußeren Atmosphäre verbindet, wobei ein Teil seines Inhalts automatisch in ein vom Kontrolleur bereitgestelltes Fläschchen gefüllt wird.

4. Verfahren gemäß einem der Ansprüche 2 oder 3, bei dem die Nummern der Milchproben automatisch verwaltet werden.

5. Verfahren gemäß einem der Ansprüche 1 bis 4, dadurch gekennzeichnet, daß es, da die Gesamtheit der Tiere vor der Kontrolle bekannt ist und da der Bezug zwischen einerseits der Durchführung der Kontrolle und den erhaltenen Ergebnissen und andererseits den identifizierten Tieren hergestellt worden ist, außerdem aus dem Nachweis der Fehler, die sich aus einem Vergleich zwischen den identifizierten Tieren und den Ergebnissen der Kontrolle ergeben, und dann deren Korrektur besteht.

6. Verfahren gemäß den Ansprüchen 1 bis 5, dadurch gekennzeichnet, daß es die Übertragung der Gesamtheit der erhaltenen Ergebnisse am Ende der Kontrolle zu einem allgemeinen Datenverwaltungssystem umfaßt.

7. Milchkontrollsystem, das in einer Melkhalle verwendet wird, die Einrichtungen zum Melken und eine Milchleitung aufweist, wobei das System
- Datenerfassungseinrichtungen (1) zum Identifizieren der Tiere, wobei diese Identifizierung in einer bestimmten Reihenfolge stattfindet, die der physischen Plazierung der Tiere in der Melkhalle in Abhängigkeit von der Konfiguration des Melkplatzes entspricht;
- Kontrollprobegefäße (3), die über eine Verkabelungsvorrichtung (4, 31) mit Steuereinrichtungen (2; 30, 32) verbunden sind und sich zwischen den Einrichtungen zum Melken und der Milchleitung befinden,
umfaßt, wobei das System so viele Kontrollprobegefäße umfaßt, wie der maximalen Anzahl der in der Melkhalle gleichzeitig gemolkenen Tiere entspricht, wobei die Datenerfassungseinrichtungen (1) allen Probegefäßen (3) gemeinsam sind und die Steuereinrichtungen (2; 30, 32) die Kontrollprobegefäße (3) ansteuern, um die Kontrollmessungen in einer beliebigen Reihenfolge durchzuführen, wobei die Datenerfassungseinrichtungen (1) und die Steuereinrichtungen (2; 30, 32) während der Identifizierung der Tiere unabhängig sind und miteinander kommunizieren, um den Bezug zwischen den Tieren und den Ergebnissen der Kontrollmessungen herzustellen.

8. System gemäß Anspruch 7, dadurch gekennzeichnet, daß die Datenerfassungseinrichtungen (1), die Steuereinrichtungen (2; 30, 32) und die Kontrollprobegefäße (3) mobil sind.

9. System gemäß einem der Ansprüche 7 oder 8, dadurch gekennzeichnet, daß die Verkabelungsvorrichtung (4, 31) fest in der Melkhalle installiert ist.

10. System gemäß einem der Ansprüche 7 bis 9, dadurch gekennzeichnet, daß die Steuereinrichtungen (2, 32) wenigstens zum Teil allen Probegefäßen (3) gemeinsam sind, wobei die Verkabelungsvorrichtung (4, 31) die Probegefäße (3) mit den Steuereinrichtungen (2, 32) verbindet.

11. System gemäß einem der Ansprüche 7 bis 10, dadurch gekennzeichnet, daß die Steuereinrichtungen (30) wenigstens teilweise mit jedem Probegefäß (3) verknüpft sind.

12. System gemäß Anspruch 10, dadurch gekennzeichnet, daß, wenn in einem Melkkarussell gemolken wird, ein drahtloses Kommunikationssystem vorgesehen ist, um eine Kommunikation zwischen den gemeinsamen Steuereinrichtungen (2, 32) und den Datenerfassungseinrichtungen (1) zu ermöglichen.

13. System gemäß Anspruch 11, dadurch gekennzeichnet, daß, wenn in einem Melkkarussell gemolken wird, ein drahtloses Kommunikationssystem vorgesehen ist, um eine Kommunikation zwischen den Steuereinrichtungen (30), die mit jedem Probegefäß verknüpft sind, und den Datenerfassungseinrichtungen (1) zu ermöglichen.

14. System gemäß den Ansprüchen 7 bis 13, dadurch gekennzeichnet, daß die gemeinsamen Steuereinrichtungen (2, 32) oder die Steuereinrichtungen (30), die mit jedem Probegefäß verknüpft sind, am Ende des Melkens jeder Gruppe die Meßergebnisse an die Datenerfassungseinrichtungen (1) übertragen.

15. System gemäß Anspruch 14, dadurch gekennzeichnet, daß die Datenerfassungseinrichtungen (1) die Fehler identifizieren, die bei der Kontrolle eventuell aufgetreten sind.

16. System gemäß den Ansprüchen 14 oder 15, dadurch gekennzeichnet, daß es mit einem Mikrocomputer (5) verbunden ist, an den die Datenerfassungseinrichtungen (1) am Ende des Melkens die Gesamtheit der Meßergebnisse übermitteln.

17. System gemäß einem der Ansprüche 7 bis 16, dadurch gekennzeichnet, daß die Kontrollprobegefäße (3) einen Behälter (6) für die Milch umfassen, wobei erste Steuerglieder (11) vorgesehen sind, um die Herstellung einer Verbindung des Behälters (6) mit der Milchleitung zu steuern, wobei der Behälter durch zweite Steuerglieder (12) mit dem Atmosphärendruck oder einer Vakuumquelle und durch dritte Steuerglieder (15) mit einem Probenahmesystem (16) verbunden wird, wobei das Probegefäß außerdem Einrichtungen (17) zum Messen der Milchmenge umfaßt, wobei die ersten, zweiten und dritten Steuerglieder (11, 12, 15) sowie die Meßeinrichtungen (17) durch die Steuereinrichtungen (2; 30, 32) angesteuert werden, um das Messen der Menge der gewonnenen Milch, das Umrühren der Milch, die Probenahme und/oder die Entleerung des Probegefäßes zu ermöglichen.

18. System gemäß Anspruch 17, dadurch gekennzeichnet, daß beim Melken die Steuereinrichtungen (2; 30, 32) auf die zweiten Steuerglieder (12) einwirken, um den Behälter (6) mit der Vakuumquelle zu verbinden, und auf die ersten und dritten Einrichtungen (11, 15) einwirken, um die Verbindung zwischen dem Behälter und einerseits der Milchleitung und andererseits dem Probenahmesystem (16) zu unterbrechen.

19. System gemäß einem der Ansprüche 17 oder 18, dadurch gekennzeichnet, daß die Steuereinrichtungen (2; 30, 32) am Ende des Melkens und vor einer eventuellen Probenahme auf die zweiten Steuerglieder (12) einwirken, um den Behälter (6) mit dem Atmosphärendruck zu verbinden, und mittels der Meßeinrichtungen (17) die Messung der Menge der Milch unabhängig vom Niveau des Vakuums der Melkanlage durchführen.

20. System gemäß Anspruch 19, dadurch gekennzeichnet, daß die Einrichtungen (17) zum Messen der Menge der gewonnenen Milch aus einem Schwimmring bestehen, der um eine Achse (21) herum angeordnet ist, die sich im Innern des Behälters (6) befindet, wobei eine Sonde im Innern dieser Achse angeordnet ist.

21. System gemäß einem der Ansprüche 19 oder 20, dadurch gekennzeichnet, daß nach der Messung der Menge der gewonnenen Milch die Steuereinrichtungen (2; 30, 32) auf die Steuerglieder (11) einwirken, um die Entleerung des Behälters (6) in die Milchleitung zu bewirken.

22. System gemäß einem der Ansprüche 17 bis 21, dadurch gekennzeichnet, daß vor der Entleerung des Behälters (6) die Steuereinrichtungen (2; 30, 32) auf die zweiten und dritten Steuerglieder (12, 15) einwirken, um das Umrühren der im Behälter vorhandenen Milch zu bewirken und dann den Behälter (6) mit dem Probenahmesystem (16) zu verbinden.

23. System gemäß einem der Ansprüche 17 bis 22, dadurch gekennzeichnet, daß bei einer Probenahme die Steuereinrichtungen den Bezug zwischen der Plazierung des Tieres und der Existenz einer Probe herstellen.

24. System gemäß einem der Ansprüche 18 bis 23, dadurch gekennzeichnet, daß während des Melkens die Steuereinrichtungen (2; 30, 32) mittels der Einrichtungen (17) zur Messung der Milchmenge Zwischenmessungen der gewonnenen Menge durchführen.
